# EUROPÄISCHE PATENTSCHRIFT

(11) **EP 0 407 507 B1**
(45) Veröffentlichungstag und Bekanntmachung des Hinweises auf die Patenterteilung: **17.03.1993**
(21) Anmeldenummer: 89912987.8
(22) Anmeldetag: 23.11.1989
(51) Int. Cl.: H01M 2/06

(54) **DURCHFÜHRUNG EINES BLEIPOLES DURCH DEN GEFÄSSDECKEL VON AKKUMULATORZELLEN**
INTRODUCTION OF A LEAD TERMINAL THROUGH THE CASE COVER OF ACCUMULATOR CELLS
PASSAGE D'UNE BORNE POLAIRE EN PLOMB A TRAVERS LE COUVERCLE D'ELEMENTS D'ACCUMULATEUR

(30) Priorität: 24.11.1988 AT 2888/88
(43) Veröffentlichungstag der Anmeldung: 16.01.1991
(73) Patentinhaber: BÄREN BATTERIE GmbH, A-9181 Feistritz im Rosental (AT)
(72) Erfinder: BRINKMANN, Jürgen, A-9064 Pischeldorf (AT)
(74) Vertreter: Holzer, Walter, Dipl.-Ing.
(86) Internationale Anmeldenummer: AT8900109
(87) Internationale Veröffentlichungsnummer: WO9005999

(56) Entgegenhaltungen:
- EP-A- 0 228 503
- DE-A- 2 514 508
- DE-A- 3 214 225
- DE-U- 8 520 278
- DE-U- 8 600 312
- GB-A- 2 087 637
- US-A- 1 599 836
- US-A- 1 642 550
- Patent Abstracts of Japan, Vol. 6, Nr. 77 (E-106)(955), 14 May 1982, & JP, A, 5715356 (SHINKOUBE DENKI K.K.) 26 January 1982
- Patent Abstracts of Japan, Vol. 9, Nr 204 (E337)(1927), 21 August 1985, & JP, A, 6068552 (FURUKAWA DENCHI K.K.) 19 April 1985

## Beschreibung

Die Erfindung betrifft die Durchführung eines Bleipoles durch den Gefäßdeckel von Akkumulatorzellen.

In der Praxis bestehen Probleme, die Durchführung eines Bleipoles durch den Deckel einer Akkumulatorzella abzudichten, speziell am positiven Pol der Zelle. Infolge der positiven Polarität und der Anwesenheit von Elektrolyt (H₂SO₄) kommt es nämlich an der Poloberfläche zur Oxidbildung, die eine Volumensvergrößerung des Materials bewirkt. Auf diese Weise bekommt die Oberfläche eine etwas poröse Struktur. Durch Kapillarwirkung wird der Elektrolyt an und in die Dichtungszonen zwischen der Bleioberfläche des Poles und dem Dichtungsmaterial transportiert. Die Oxidbildung setzt sich fort und das Oxid dringt dadurch keilförmig zwischen die Dichtungsflächen und hebt das Dichtungsmaterial langsam vom Pol ab. Dies führt zu weiterem Vordringen der Säure in die Dichtungszonen, verbunden mit einem weiteren Vordringen der Oxidschicht. Dieser Vorgang wiederholt sich, bis die gesamte Dichtungszone unterwandert ist.

Die Säure dringt also nicht an der Oberfläche des Poles durch die Dichtung hindurch vor, sondern innerhalb der Poloberfläche infolge Veränderung derselben, weil aus einer relativ glatten Bleioberfläche eine dünne poröse Oberflächenschicht aus Bleioxid erzeugt wird (PbO₂). Es ist bekannt, daß viele zentimeterlange Dichtungsflächen im Laufe der Betriebsjahre auf diese Weise unterwandert werden, wobei dieser Vorgang durch die bisher bekannten Dichtungen nicht gestoppt werden konnte.

Undichte Pole führen aber zu erheblichen Problemen in der Praxis. Zunächst wird die Isolation an der Zellenoberfläche durch die austretende Säure verringert. Mit der Oxidation der Poloberfläche verbundene Gasentwicklung führt zum Auftreten von Gasblasen in der Vergußmasse der Zelle und dadurch zu einer scheinbaren Volumensvergrößerung der Vergußmasse, so daß diese aus dem Polvergußteil herausquillt. Austretende Säure führt auch an dem von außen sichtbaren Polteil zur Korrosion. Bei Verwendung von anderen Metallen als Blei, z.B. Kupfer, als Poleinlage und Verbinder mit verbesserter Stromleitfähigkeit wird dieses Metall auf dem positiven Pol in relativ kurzer Zeit völlig korrodiert und damit die Zelle zerstört.

Die einzige bisher bekamt gewordene Maßnahme, ein Unterwandern der Dichtung durch die Säure zu vermeiden, besteht darin, die Dichtungsfläche mit sehr hoher Flächenpressung zu bilden. Praktisch ist dies durch einen Gummi-O-Ring möglich, der durch eine auf den Polschaft aufgeschraubte Überwurfmutter bzw. eine Verlängerung derselben definiert auf eine Polschaftfläche gepreßt wird (DE-OS 32 14 225, EP-A1-O 228 503). Die Voraussetzungen hiefür sind: Die Bleioberfläche muß sehr glatt sein, darf keine Lunkerstellen, keinen Grat und kein Oxid enthalten, und die Fließfähigkeit des Bleis muß bei der konstruktiven Lösung berücksichtigt werden, weil Blei unter hohem Druck fließt.

Ein weiteres Problem ergibt sich dadurch, daß im Laufe der Lebenszeit einer Batterie, vornehmlich einer Traktionsbatterie, die positiven Bleileiter anoxidieren. Dies führt zu einer Volumensvergrößerung des Leitermaterials. In der Praxis führt dies unter anderem zu einem Längenwachstum der positiven Zellenplatten. Es muß desbalb konstruktiv dafür Sorge getragen werden, daß dieses Längenwachstum nicht zu hohen mechanischen Beanspruchungen der Platten und der Zellengefäße führt.

Es ist bekamt, die Platten am oberen Teil des Zellengefäßes aufzuhängen, damit sie nach unten wachsen können. Dies ergibt aber den Nachteil einer starken mechanischen Belastung des Zellengefäßes.

Bei Zellen, deren Platten auf dem Zellenboden aufstehen, ist die Zelle entweder oben offen, oder der Zellendeckel ist gegenüber dem Zellengefäß verschiebbar angebracht, was den Nachteil hat, daß die Zelle nicht dicht ist.

Bei einem Verschweißen von Zellendeckel und Zellengefäß führt das Wachsen der Platten zu hohen mechanischen Beanspruchungen der Schweißverbindung und der Platten und kann sogar ihre Zerstörung bewirken. Bei flexiblen Deckeln beulen sich anderseits die Deckel aus. Auch hier kann es zu Zerstörungen kommen.

Bei einer Zellenkonstruktion, bei welcher die Zellendeckel und das Zellengefäß thermisch verschweißt werden, handelt es sich überdies um ein überbestimmtes System, bei welchem bereits beim Zusammenschweißen von Zellendeckel und Zellengefäß infolge von Fertigungstoleranzen teilweise erhebliche mechanische Spannungen in der Zelle erzeugt werden, die sich den mechanischen Spannungen infolge des Plattenwachstums überlagern.

Die Erfindung zielt darauf ab, eine Poldurchführung zu schaffen, welche bei verschweißten Zellen die geschilderten Nachteile vermeidet und eine einwandfreie Abdichtung des Poles gegenüber dem Zellendeckel bei gleichzeitiger Vermeidung von mechanischen Beanspruchungen des Zellengefäßes, des Deckels und des Plattensatzes infolge Wachsen der positiven Platten sowie einen Ausgleich der Herstellungstoleranzen ermöglicht.

Die erfindungsgemäße, insbesondere für positive Pole bestimmte Poldurchführung, bei welcher auf den Schaft des Bleipoles in Höhe des Zellendeckels eine Überwurfmutter aufgeschraubt ist, die an ihrem unteren Ende eine Verlängerung mit einer Hohlkehle aufweist, welche einen Dichtungs-O-Ring aufnimmt und diesen gegen einen Axialabsatz des Polschaftes preßt, zeichnet sich dadurch aus, daß die Hohlkehle der Verlängerung der Überwurfmutter am Dichtungs-O-Ring mittels einer zur axialen Richtung unter einem vorbestimmten Winkel geneigten Druckfläche angreift, über welche der Dichtungs-O-Ring auch in radialer Richtung gegen den Polschaft preßbar ist, und daß die Überwurfmutter mittels einer weiteren ringförmigen Dichtung in radialer Richtung gegen eine axial verlaufende Dichtfläche eines die Überwurfmutter koaxial umgebenden Kragens des Zellendeckels abgedichtet ist, wobei dieser Kragen an seiner Außenseite eine axial verlaufende Dichtfläche für eine relativ zu dieser in axialer Richtung bewegliche Dichtungslippe der Abdeckkappe bildet.

Auf diese Weise ist der Polschaft gegen den Zellendeckel und dieser gegen die Abdeckkappe unter Ermöglichung einer Relativbewegung zwischen Pol bzw. Abdeckkappe einerseits und Zellendeckel bzw. Zellengefäß anderseits sowie eines allfälligen Toleranzausgleiches einwandfrei abgedichtet. Insbesondere wird die definierte hohe Flächenpressung des von der Überwurfmutter gegen den Absatz des Polschaftes gepreßten Dichtungs-O-Ringes bei der Relativbewegung aufrecht erhalten, wobei sich erfindungsgemäß eine zweifache Linienpressung ergibt, wodurch die Sicherheit erhöht ist. Zugleich wird eine undefinierte Verformung des O-Ringes ausgeschlossen. Das erfindungsgemäße Dichtungssystem verhindert, daß weder Säure aus der Zelle nach außen, noch Säure oder sonstige Verunreinigungen von der Umgebung her in die Zelle dringen können.

Vorteilhaft ist die Ringdichtung durch einen in eine Ringnut der Überwurfmutter eingesetzten Dichtungs-O-Ring gebildet.

Gemäß einer bevorzugten Ausführungsform der Erfindung wird die Relativbeweglichkeit zwischen Pol und Zellendeckel unter einwandfreier Abdichtung dadurch gesichert, daß die Verlängerung der Überwurfmutter, wie an sich bekamt, durch einen Schaftteil derselben und einen elastischen axialen Balgteil des Zellendeckels gebildet ist, welcher die Hohlkehle zur Aufnahme des am Absatz des Polschaftes aufliegenden O-Ringes aufweist.

Alternativ kann vorgesehen sein, daß die zwischen der Außenseite der Überwurfmutter und der Innenseite des Kragens des Zellendeckels eingeschaltete Ringdichtung aus einem Gummiring gebildet ist, an den nach oben eine den Zellendeckel mit der Überwurfmutter verbindende Schmelzklebemasse anschließt.

Zur Verbesserung der Abdichtung zwischen Zellendeckel und Abdeckkappe ist vorzugsweise die Dichtungslippe wulstartig ausgebildet und auch in axialer Richtung gegen die Oberseite des Zellendeckels abdichtend andrückbar.

Weitere Merkmale der Erfindung werden nachfolgend an Ausführungsbeispielen unter Bezugnahme auf die Zeichnungen näher erläutert, in denen zeigen:
Fig. 1 einen Schnitt durch eine Poldurchführung gemäß einer ersten Ausführungsform der Erfindung und
Fig. 2 einen Schnitt durch eine zweite Ausführungsform.

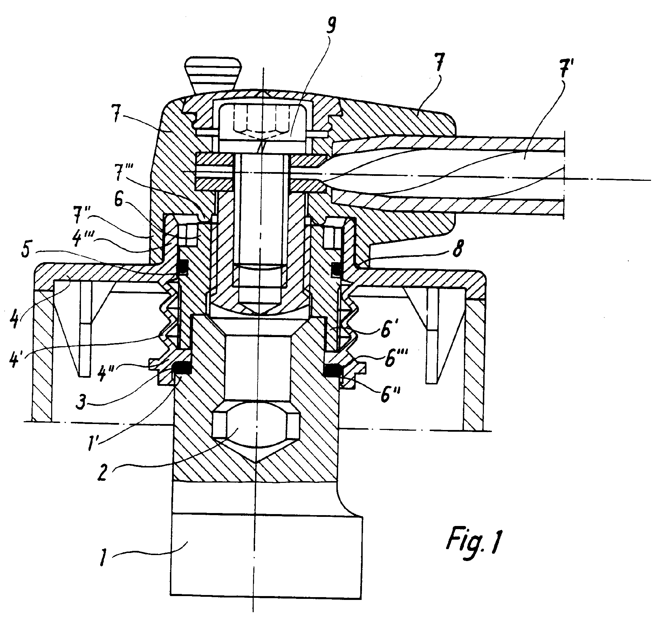

Gemäß Fig. 1 wird ein Dichtungs-O-Ring 3 aus Gummi mittels einer auf einen Kupfereinsatzteil 2 eines Bleipoles 1 aufgeschraubten Überwurfmutter 6 definiert auf einen Axialabsatz 1′ des Polschaftes 1 gepreßt, u.zw. unter Zwischenschaltung eines aus Kunststoff bestehenden Balgteiles 4′ eines Zellendeckels 4, welcher die Überwurfmutter 6 koaxial umgibt. Durch Verwendung von flexiblem Material für den Balgteil 4′ kann dieser Balgteil um etwa 10 bis 15 mm zusammengepreßt werden, ohne daß dabei allzu große Kräfte aufgebracht werden müssen. Der Axialabsatz 1′ am Polschaft 1 wird zweckmäßig sowohl in der horizontalen, wie auch vertikalen Fläche durch Drehen bearbeitet und hat dadurch eine sehr feine Oberfläche.

Der Anpreßabschnitt 4˝ des Balgteiles 4′, mit dem der O-Ring 3 gepreßt wird, bildet eine Hohlkehle mit einer Druckfläche 6‴, die so ausgebildet ist, daß der O-Ring 3 sowohl vertikal auf den Axialabsatz 1′, als auch radial gegen die Oberfläche des Polschaftes 1 gedrückt wird. Der O-Ring erzeugt dadurch eine Linienpressung sowohl auf dem Absatz als auch auf dem Polschaft. Infolge dieser zweifachen Linienpressung wird ein so hoher Druck zwischen dem Gummi und der Bleioberfläche erzeugt, daß die Säure in der Oberfläche nicht an der Dichtung vorbeigehen kann. Bei sehr starkem Druck ist der O-Ring 3 vollkommen in eine Kammer eingeschlossen, die aus dem Polschaft 1 bzw. dem Polabsatz 1′ und dem Anpreßabschnitt 4˝ des Balgteiles 4′ gebildet wird. Da Gummi zwar elastisch, aber nicht komprimierbar ist, wird bei starkem Druck durch die Überwurfmutter 6 ein sehr starker Gegendruck durch den zusammengedrückten O-Ring 3 erzeugt, was eine überproportional ansteigende Druckkraft mit "auf Block fahren" beim Anziehen der Überwurfmutter 6 ergibt.

Die Überwurfmutter 6 hat an ihrem unteren Ende einen langen und relativ dünnen Schaft 6′, der beim Anziehen der Mutter mit einem Drehmomentschlüssel eine gewisse Federwirkung entfaltet. Bei einem eventuellen Fließen des Bleies durch zu hohe Flächenpressung stellt sich durch diese Federwirkung und durch die Elastizität des Gummi-O-Ringes der Druck automatisch etwas nach.

Die Überwurfmutter 6 hat an ihrer Außenseite mit Axialabstand oberhalb des O-Ringes 3 eine Ringnut zur Aufnahme eines weiteren Dichtungs-O-Ringes 5, welcher die Überwurfmutter 6 in radialer Richtung gegen einen koaxialen Kragen 4‴ des Zellendeckels 4 abdichtet. Beim Wachsen der Zellenplatten bewegt sich nämlich der Polschaft 1 nach oben und mit ihm der O-Ring 3. Hiebei wird die Abdichtwirkung um den O-Ring 3 herum in keiner Weise beeinträchtigt, weil der Balgteil 4′ bei der Polbewegung zusammengedrückt wird, wobei nur ganz geringe Kräfte auftreten, so daß die Dichtungselemente mit dem O-Ring 3 nicht zusätzlich mechanisch beansprucht werden. Der Deckel 4 wird dadurch ebenfalls nicht deformiert, insbesondere wird die Schweißung zwischen dem Deckel und dem Zellenkasten nicht belastet. Auch auf die Zellenplatten wird infolge dieser Konstruktion keine große Kraft ausgeübt, die gegebenenfalls zu Beschädigungen führen könnte.

Der O-Ring 5 gleitet bei der Relativbewegung zwischen Polschaft 1 und Deckel 4 an der Innenfläche des Deckelkragens 4‴ entlang, wobei die Abdichtung aufrecht bleibt.

Eine wulstartige Lippe 8 an der Unterseite einer aus flexiblem Material bestehenden, einen Verbinder 7′ aufnehmenden Polabdeckkappe 7 dichtet an der Außenfläche des Kragens 4‴ des Zellendeckels ab, u.zw. auch dann, wenn der Polschaft 1 und damit die Kappe 7 durch Wachsen der Zellenplatten nach oben gedrückt werden.

Die Dichtlippe 8 ist am Ende eines Schaftes 7˝ der Kappe 7 ausgebildet. Der Schaft 7˝ wird zugleich auf die Oberfläche des Deckels 4 fest angedrückt und dichtet ebenfalls ab, wenn die Kappe 7 durch Einschrauben einer Schraube 9 in den Einsatzteil 2 befestigt wird. Dabei wird auch der Kragen 4‴ des Deckels mit seiner oberen Stirnseite gegen die Innenfläche der Kappe 7 gedrückt, wodurch eine zusätzliche Abdichtung erzeugt wird. Auf diese Weise wird jegliche Gefahr eines Eindringens von Verunreinigungen und Säuren von der Umgebung in die Zelle und an die metallischen Teile des Einsatzteiles 2 und des Verbinders 7′ vermieden.

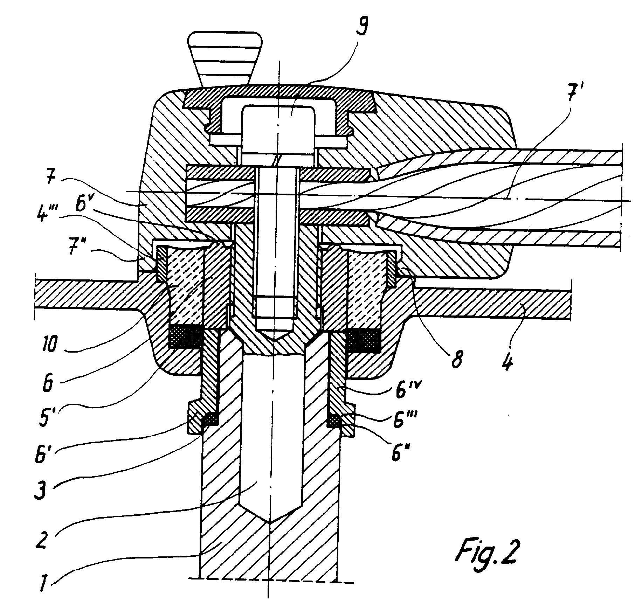

Fig. 2 zeigt eine Poldurchführung für eine stationäre Batterie, wobei die Verbindung zwischen Bleipolschaft 1 und Verbinder 7′ ebenfalls durch Verschrauben erfolgt. Der Verbinder 7′ und die Abdeckkappe 7 sind ähnlich der für Traktionsbatterien nach Fig. 1 beschriebenen Ausführung ausgebildet.

Die Abdichtung der Poldurchführung auf einem Axialabsatz 1′ der Polschaftoberfläche erfolgt wie bei der Ausführung nach Fig. 1 mit einem Dichtungs-O-Ring 3 einer Überwurfmutter 6 und einer die Verlängerung derselben bildende Preßhülse 6′^{v} mit in dieser ausgebildeter Hohlkehle 6˝. An der Außenseite der Preßhülse 6′^{v} greift ein Gummidichtring 5′ mit Rechteckquerschnitt an, der gut gegen den Kunststoff des Zellendeckel 4 abdichtet. Mit 10 ist eine Schmelzklebemasse bezeichnet, die den Ringraum oberhalb des Dichtungsringes 5′ zwischen Überwurfmutter 6 der Preßhülse 6′^{v}, dem Zellendeckel 4 und einem als Ringhülse ausgebildeten Kragen 4‴ des Deckels 4 ausfüllt und beim Wachsen der Zellenplatten eine Verschiebung des Polschaftes 1 mit dessen aus Kupfer bestehenden Einsatz 2, der Überwurfmutter 6 und der Preßhülse 6′^{v} gegenüber dem Deckel 4 zuläßt. An der Außenseite der Ringhülse 4‴ greift wie beim ersten Ausführungsbeispiel die Dichtlippe 8 der Kappe 7 an.

Die Preßhülse 6′^{v} hat Federeigenschaften und weist eine Hohlkehle zur Aufnahme des O-Ringes 3 auf. Der Polschaft 1 ist gemeinsam mit den ihm zugeordneten Teilen gegenüber dem Deckel 4 verschiebbar, ohne daß dadurch die Dichtheit der Poldurchführung gefährdet wird.

Bei den in den Fig. 1 und 2 gezeigten Ausführungsformen der Erfindung weist die Hohlkehle 6˝ eine Druckfläche 6‴ mit einer horizontalen, einer vertikalen und einer diese verbindenden, z.B. unter 45° geneigten Anlagefläche für den O-Ring 3 auf. Dadurch wird eine gleich hohe Linienpressung in axialer und in radialer Richtung auf dem Schaft 1 gewährleistet. Wie sowohl Fig. 1 als auch Fig. 2 zeigt, überlappt das Ende der Verlängerung 6′ bzw. die Preßhülse 6′^{v} der Überwurfmutter den Absatz 1′ des Polschaftes 1 in axialer Richtung um ein vorbestimmtes Maß, wobei dieser Überlappungsabschnitt auch ein vorbestimmtes radiales Spiel aufweist, damit eine ordnungsgemäße Zentrierung der Teile vor dem Pressen gewährleistet wird, keine Verquetschung des O-Ringes nach dem Pressen auftreten kann und kein Hindurchquetschen des O-Ringes durch den Spalt zwischen Überlappungsabschnitt und Absatz erfolgen kann.

Bei den dargestellten Ausführungsformen bilden der Pol 1, der Einsatzteil 2, die Mutter 6, die Hohlkehle 6˝, der O-Ring 3, der Verbinder 7′ und die Abdeckkappe 7 mit dem Schaft 7˝ durch die kraftschlüssige Verbindung untereinander eine kompakte Einheit. Bei starken Rüttelbewegungen, der die ganze Zelle im praktischen Betrieb ausgesetzt sein kann, können diese Teile untereinander nicht schwingen bzw. gegeneinander keine Relativbewegung ausführen.

Bei der Ausführungsform nach Fig. 1 hat der Deckel 4 mit dem Kragen 4‴ infolge des flexiblen Balges 4′ keine kraftschlüssige Verbindung zu der vorstehend definierten kompakten Einheit. Dadurch kann sich die kompakte Einheit beim Wachsen der Platten gegenüber dem Deckel 4 mit dem Kragen 4‴ nach oben bewegen, ohne dabei große Kräfte auf die Bauteile auszuüben. In der Praxis kann aber infolge von Rüttelbeanspruchung der ganzen Zelle eine weitere sehr störende Relativbewegung mit relativ hoher Frequenz und sehr kleinen Ausschlägen (Weglängen) zwischen der kompakten Einheit und dem Deckel 4 mit dem Kragen 4‴ auftreten.

Solche Rüttelbewegungen können im einzelnen ein ständiges Abheben und Wiederaufdrücken des Schaftes 7˝ von der bzw. auf die Oberfläche des Deckels 4, kurze Auf- und Abbewegungen der Lippe 8 an der Außenfläche des Kragens 4‴ und ein ständiges Abheben des oberen Teiles des Kragens 4‴ von der Innenseite der Kappe 7 mit anschließendem Wiederandrücken bewirken.

Diese Bewegungen können anderseits zu einem Verlust der Dichtungsfunktion dieser drei Dichtungen führen. Im Extremfall kann sogar eine Art Pumpwirkung entstehen und Feuchtigkeit bzw. Säure, die auf der Oberfläche des Deckels 4 steht, kann in den Raum zwischen Abdeckkappe 7 und Mutter 6 gepumpt werden. Hier trifft die Säure auf die Kupfereinlage 2, einen Kupfer-Kabelschuh und den Verbinder 7′ aus Kupfer und bewirkt eine sehr schnelle Korrosion dieser Teile.

Dieses Problem kann vermieden werden, wenn erfindungsgemäß die metallischen Teile der vorstehend definierten kompakten Einheit noch einmal separat vollständig gegen Berührung durch Säure abgedichtet werden.

Hiezu erhält die Abdeckkappe 7 an der inneren unteren Seite einen ringförmigen Wulst 7‴, der beim Anziehen der Schraube 9 gegen die obere Fläche der Mutter 6 gepreßt wird (Fig. 1).

Alternativ kann die obere Fläche der Mutter 6 einen ringförmigen Wulst 6^{v} haben, der gegen die glatte Oberfläche der Unterseite der Abdeckkappe 7 drückt, wenn die Verbindung durch Anziehen der Schraube 9 erfolgt (Fig. 2).

Es ist auch möglich, diese Dichtung aus Elementen sowohl an der Mutter 6 als auch an der Unterseite der Kappe 7 zu bilden. So kann z.B. die aus mechanisch festem Material hergestellte Mutter 6 eine Art Ringnut haben, in die ein aus flexiblem Material an der Unterseite der Kappe 7 ausgebildeter Ringwulst eingepreßt wird und dadurch dichtet.

Da die Mutter 6 mit der Abdeckkappe 7 kraftschlüssig verbunden ist, kann auch bei stärkster Rüttelbeanspruchung der Zelle keine Beeinträchtigung der Funktion der Dichtung zwischen Mutter und Abdeckkappe eintreten. Es ist somit eine Relativbewegung zwischen der kompakten Einheit und dem Deckel mit Schaft im Sinne der Erfindung möglich, wobei die Dichtung zwischen der Mutter 6 und dem unteren Teil der Abdeckkappe 7 auch bei starken Rüttelbewegungen voll funktionsfähig bleibt. Bei starken Rüttelbewegungen in den Raum zwischen Kappe 7 und Mutter 6 allenfalls von außen hineingelangte Säure kann nicht an die Kupferteile der Poleinlage 2, den Kabelschuh und den Verbinder 7′ gelangen. Bei extremen Wachstum der positiven Platten, d.h. wem der Wulst 8 am Schaft 7˝ über das obere Ende des Kragens 4‴ hinausgeschoben wird und damit diese Dichtung nicht mehr wirksam ist, bleibt dennoch die Dichtung zwischen Mutter 6 und unterem Teil der Kappe 7 stets voll funktionsfähig.

Es versteht sich, daß die erläuterten Ausführungsbeispiele im Rahmen des allgemeinen Erfindungsgedankens verschiedentlich abwandelbar sind.

## Patentansprüche

1. Durchführung eines Bleipoles, insbesondere des positiven Poles, durch den Gefäßdeckel von Akkumulatorzellen, bei welcher auf den Schaft des Bleipoles in Höhe des Zellendeckels eine Überwurfmutter aufgeschraubt ist, die an ihrem unteren Ende eine Verlängerung mit einer Hohlkehle aufweist, welche einen Dichtungs-O-Ring aufnimmt und diesen gegen einen Axialabsatz des Polschaftes preßt, dadurch gekennzeichnet, daß die Hohlkehle (6˝) der Verlängerung (6′, 6′^{v}) der Überwurfmutter (6) am Dichtungs-O-Ring (3) mittels einer zur axialen Richtung unter einem vorbestimmten Winkel geneigten Druckfläche (6‴) angreift, über welche der Dichtungs-O-Ring auch in radialer Richtung gegen den Polschaft preßbar ist, und daß die Überwurfmutter (6) mittels einer weiteren ringförmigen Dichtung (5, 5′) in radialer Richtung gegen eine axial verlaufende Dichtfläche eines die Überwurfmutter (6) koaxial umgebenden Kragens (4‴) des Zellendeckels (4) abgedichtet ist, wobei dieser Kragen (4‴) an seiner Außenseite eine axial verlaufende Dichtfläche für eine relativ zu dieser in axialer Richtung bewegliche Dichtungslippe (8) der Abdeckkappe (7) bildet.

2. Poldurchführung nach Anspruch 1, dadurch gekennzeichnet, daß die Ringdichtung (5) durch einen in eine Ringnut der Überwurfmutter (6) eingesetzten Dichtungs-O-Ring gebildet ist (Fig. 1).

3. Poldurchführung nach Anspruch 1 oder 2, dadurch gekennzeichnet, daß die Verlängerung (6′) der Überwurfmutter (6), wie an sich bekannt, durch einen Schaftteil derselben und einen elastischen axialen Balgteil (4′) des Zellendeckels (4) gebildet ist, welcher die Hohlkehle (6˝) zur Aufnahme des am Absatz (1′) des Polschaftes (1) aufliegenden O-Ringes (3) aufweist.

4. Poldurchführung nach Anspruch 1, dadurch gekennzeichnet, daß die zwischen der Außenseite der Überwurfmutter (6) und der Innenseite des Kragens (4‴) des Zellendeckels (4) eingeschaltete Ringdichtung aus einem Gummiring (5′) gebildet ist, an den nach oben eine den Zellendeckel (4) mit der Überwurfmutter (6) verbindende Schmelzklebemasse (10) anschließt.

5. Poldurchführung nach einem der Ansprüche 1 bis 4, dadurch gekennzeichnet, daß die eine horizontale und eine vertikale Anlagefläche für den Dichtungs-O-Ring aufweisende Hohlkehle (6˝) der Verlängerung (6′^{v}) der Überwurfmutter auch mit einer sich zwischen diesen erstreckenden schrägen Anlagefläche für den Dichtungs-O-Ring versehen ist.

6. Poldurchführung nach einem der Ansprüche 1 bis 5, dadurch gekennzeichnet, daß die Dichtungslippe (8) wulstartig ausgebildet ist und auch in axialer Richtung gegen die Oberseite des Zellendeckels (4) abdichtend andrückbar ist.

7. Poldurchführung nach einem der Ansprüche 1 bis 6, dadurch gekennzeichnet, daß der Kragen (4‴) des Zellendeckels (4) mit seinem freien Ende an der Unterseite der Abdeckkappe (7) abdichtend angreift.

8. Poldurchführung nach einem der Ansprüche 1 bis 7, dadurch gekennzeichnet, daß die Unterseite der Abdeckkappe (7) an der Oberseite der Überwurfmutter (6) abdichtend angreift, vorzugsweise über einen an dem einen oder anderen Teil vorgesehenen Ringwulst (6^{v}, 7‴).

## Claims

1. Introduction of a lead terminal, especially the positive terminal, through the case cover of accumulator cells, wherein a union nut is screwed on to the shaft of the lead terminal at the level of the cell cover, the lower end of said union nut having an extension comprising a groove which receives a sealing O-ring and presses it against an axial shoulder of the terminal shaft, characterised in that the groove (6˝) of the extension (6′, 6˝˝) of the union nut (6) engages with the sealing O-ring (3) by means of a pressure surface (6‴) inclined at a predetermined angle relative to the axial direction, and by means of which the sealing O-ring can also be pressed in the radial direction against the terminal shaft, and that the union nut (6) is sealed in the radial direction against an axially extending sealing surface of a collar (4‴) of the cell cover (4) coaxially surrounding the union nut (6) by means of a further annular seal (5, 5′), the outer face of this collar (4‴) forming an axially extending sealing surface for a sealing lip (8) of the cap (7) movable in the axial direction relative to said sealing surface.

2. Introduction of a terminal according to claim 1, characterised in that the annular seal (5) is formed by a sealing O-ring inserted into an annular groove of the union nut (6) (Fig. 1).

3. Introduction of a terminal according to claim 1 or claim 2, characterised in that the extension (6′) of the union nut (6), as is known per se, is formed by a shaft portion of said union nut and an axial elastic bellows element (4′) of the cell cover (4), having the groove (6˝) for receiving the O-ring (3) lying against the shoulder (1′) of the terminal shaft (1).

4. Introduction of a terminal according to claim 1, characterised in that the annular seal inserted between the outer face of the union nut (6) and the inner face of the collar (4‴) of the cell cover (4) is formed by a rubber ring (5′) adjoined towards the top by a hot melt adhesive material (10) connecting the cell cover (4) to the union nut (6).

5. Introduction of a terminal according to one of claims 1 to 4, characterised in that the groove (6˝) of the extension (6˝˝) of the union nut (6) having a horizontal and a vertical bearing surface for the sealing O-ring is also provided with an inclined bearing surface for the sealing O-ring extending therebetween.

6. Introduction of a terminal according to one of claims 1 to 5, characterised in that the sealing lip (8) is toric and can also be pressed in the axial direction in a sealed manner against the top surface of the cell cover (4).

7. Introduction of a terminal according to one of claims 1 to 6, characterised in that the collar (4‴) of the cell cover (4) engages in a sealed manner by means of its free end with the underside of the cap (7).

8. Introduction of a terminal according to one of claims 1 to 7, characterised in that the underside of the cap (7) engages in a sealed manner with the top surface of the union nut (6), preferably by means of a torus (6‴˝, 7‴) provided on either of the parts.

## Revendications

1. Passage d'une borne polaire en plomb, en particulier de la borne polaire positive, à travers le couvercle d'éléments d'accumulateurs, dans lequel un capuchon taraudé vissé sur le fût de la borne polaire en plomb, à la hauteur du couvercle des éléments, présente à son extrémité inférieure un prolongement muni d'un congé qui reçoit un joint torique d'étanchement, et presse te dernier contre un décrochement axial du fût de la borne polaire, caractérisé par le fait que le congé (6˝) du prolongement (6′, 6^{IV}) du capuchon taraudé (6) vient en prise, avec le joint torique d'étanchement (3), au moyen d'une surface de pression (6‴) qui est inclinée d'un angle prédéterminé par rapport au sens axial, et par l'intermédiaire de laquelle le joint torique d'étanchement peut également être comprimé dams le sens radial, contre le fût de la borne polaire ; et par le fait que l'étanchéité du capuchon taraudé (6) est assurée au moyen d'une autre garniture annulaire d'étanchement (5, 5′), dans le sens radial, contre une surface d'étanchement à étendue axiale d'un collet (4‴) du couvercle (4) des éléments, qui entoure coaxialement le capuchon taraudé (6), ce collet (4‴) formant, sur sa face externe, une surface d'étanchement s'étendant axialement et destinée à une lèvre d'étanchement (8) de la coiffe de recouvrement (7), qui est mobile dans le sens axial par rapport à ladite surface.

2. Passage d'une borne polaire, selon la revendication 1, caractérisé par le fait que la garniture annulaire d'étanchement (5) est formée par un joint torique d'étanchement encastré dans une gorge annulaire du capuchon taraudé (6) (figure 1).

3. Passage d'une borne polaire, selon la revendication 1 ou 2, caractérisé par le fait que le prolongement (6′) du capuchon taraudé (6) est formé, d'une manière connue par elle-même, par une partie longiligne dudit capuchon, ainsi que par une partie axiale élastique (4′) du type soufflet du couvercle (4) des éléments, qui présente le congé (6˝) destiné à recevoir le joint torique (3) appliqué contre le décrochement (1′) du fût (1) de la borne polaire.

4. Passage d'une borne polaire, selon la revendication 1, caractérisé par le fait que la garniture annulaire d'étanchement, interposée entre la face externe du capuchon taraudé (6) et la face interne du collet (4‴) du couvercle (4) des éléments, est formée d'une bague (5′) en caoutchouc à laquelle se rattache, vers le haut, une masse thermo-adhésive (10) qui relie le couvercle (4) des éléments et le capuchon taraudé (6).

5. Passage d'une borne polaire, selon l'une des revendications 1 à 4, caractérisé par le fait que le congé (6˝) du prolongement (6^{IV}) du capuchon taraudé, présentant une surface de contact horizontale et une surface de contact verticale pour le joint torique d'étanchement, est également pourvu, pour ledit joint torique d'étanchement, d'une surface de contact inclinée qui s'étend entre les surfaces précitées.

6. Passage d'une borne polaire, selon l'une des revendications 1 à 5, caractérisé par le fait que la lèvre d'étanchement (8) est de réalisation du type bourrelet et peut également être comprimée dans le sens axial, avec effet d'étanchement, contre la face supérieure du couvercle (4) des éléments.

7. Passage d'une borne polaire, selon l'une des revendications 1 à 6, caractérisé par le fait que le collet (4‴) du couvercle (4) des éléments vient en prise avec effet d'étanchement, par son extrémité libre, avec la face inférieure de la coiffe de recouvrement (7).

8. Passage d'une borne polaire, selon l'une des revendications 1 à 7, caractérisé par le fait que la face inférieure de la coiffe de recouvrement (7) est appliquée avec effet d'étanchement contre la face supérieure du capuchon taraudé (6), de préfèrence par l'intermédiaire d'un bourrelet annulaire (6^{v}, 7‴) prévu sur l'une ou l'autre de ces parties.
